(19) Europäisches Patentamt
European Patent Office
Office européen des brevets

(11) **EP 4 756 887 A1**

(12) **EUROPEAN PATENT APPLICATION**

(43) Date of publication:
**10.06.2026 Bulletin 2026/24**

(21) Application number: **25220866.5**

(22) Date of filing: **04.12.2025**

(51) International Patent Classification (IPC):
**H01M 4/04** *(2006.01)*  **H01M 10/04** *(2006.01)*

(52) Cooperative Patent Classification (CPC):
**H01M 4/0435; H01M 10/0404**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.12.2024 KR 20240180744**

(71) Applicant: **SAMSUNG SDI CO., LTD.**
**Yongin-si, Gyeonggi-do 17084 (KR)**

(72) Inventors:
• **CHEON, Su Ho**
 **16678 Suwon-si, Gyeonggi-do (KR)**
• **PARK, Seok Gyun**
 **16678 Suwon-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(54) **MANUFACTURING APPARATUS AND MANUFACTURING METHOD OF ELECTRODE**

(57)    An apparatus for manufacturing an electrode and an electrode manufacturing method are disclosed. An apparatus for manufacturing an electrode includes a roller configured to roll an electrode plate, and the roller is configured to primarily roll the electrode plate at a first compression ratio to form a primary electrode plate, secondarily roll the primary electrode plate at a second compression ratio to form a secondary electrode plate, and tertiarily roll the secondary electrode plate at a third compression ratio to form a tertiary electrode plate.

FIG. 5

## Description

## BACKGROUND

### 1. Field

Aspects of embodiments of the present disclosure relate to an electrode manufacturing apparatus and an electrode manufacturing method.

### 2. Description of the Related Art

Secondary batteries are batteries that can be charged and discharged, unlike primary batteries that cannot be recharged. Low-capacity secondary batteries are used in small portable electronic devices, such as smartphones, feature phones, notebook computers, digital cameras, and camcorders, and high-capacity secondary batteries are widely used as power sources for driving motors in hybrid vehicles, electric vehicles, and the like and power storage batteries. The secondary battery includes electrodes including a positive electrode and/or a negative electrode, an electrode assembly including the electrodes, a case accommodating the electrode assembly, and an electrode terminal connected to the electrode assembly.

As technology advances, high-capacity secondary batteries are desired. Accordingly, a plurality of secondary batteries can be used by being electrically connected. For example, secondary batteries can be applied in the form of a secondary battery module including a plurality of secondary batteries and/or a secondary battery pack including a plurality of secondary battery modules to electronic devices. In this case, the electronic devices are electronic devices requiring high output and/or high capacity and include, for example, electric vehicles and the like.

## SUMMARY

The invention is defined by the appended claims. The description that follows is subject to this limitation. Any disclosure lying outside the scope of said claims is only intended for illustrative as well as comparative purposes.

According to an aspect of one or more embodiments of the present invention, an electrode manufacturing apparatus and/or an electrode manufacturing method which perform(s) rolling multiple times are provided.

According to another aspect of one or more embodiments of the present invention, an electrode manufacturing apparatus and/or an electrode manufacturing method which manufacture(s) an electrode by rolling an electrode plate at least three times are provided.

According to another aspect of one or more embodiments of the present invention, an electrode manufacturing apparatus that manufactures an electrode including a high-density composite material layer while improving the quality of an electrode plate is provided.

However, aspects and technical problems to be solved by the present invention are not limited to the above-described aspects and problems to be solved, and other aspects and problems to be solved which are not described will be clearly understood by those skilled in the art from the following description.

According to one or more embodiments of the present invention, an electrode manufacturing apparatus includes a roller configured to roll an electrode plate, wherein the roller is configured to primarily roll the electrode plate at a first compression ratio to form a primary electrode plate, secondarily roll the primary electrode plate at a second compression ratio to form a secondary electrode plate, and tertiarily roll the secondary electrode plate at a third compression ratio to form a tertiary electrode plate.

According to one or more embodiments of the present invention, an electrode manufacturing apparatus includes a first roller configured to primarily roll an electrode plate at a first compression ratio to form a primary electrode plate, a second roller configured to secondarily roll the primary electrode plate at a second compression ratio to form a secondary electrode plate, and a third roller configured to tertiarily roll the secondary electrode plate at a third compression ratio to form a tertiary electrode plate.

According to one or more embodiments of the present invention, an electrode manufacturing method includes primarily rolling an electrode plate at a first compression ratio to form a primary electrode plate, secondarily rolling the primary electrode plate at a second compression ratio to form a secondary electrode plate, and tertiarily rolling the secondary electrode plate at a third compression ratio to form a tertiary electrode plate.

## BRIEF DESCRIPTION OF THE DRAWINGS

The following drawings attached to the present specification illustrate some embodiments of the present invention and are provided for further understanding of the technical idea of the present invention together with the detailed description of the invention to be described below; however, the present invention is not to be construed as being limited only to matters described in the drawings:

> FIGS. 1 to 4 are views schematically showing a secondary battery according to some embodiments of the present invention;
> FIG. 5 is a view schematically showing an electrode manufacturing apparatus according to an embodiment of the present invention;
> FIG. 6 is a flowchart for describing an electrode manufacturing method according to an embodiment of the present invention; and
> FIG. 7 is a table for comparatively describing electrodes manufactured according to comparative examples and an electrode manufactured according to an example of the present invention.

## DETAILED DESCRIPTION

Herein, some embodiments of the present invention will be described in further detail with reference to the accompanying drawings.

In addition, the terms "comprise" or "include" and/or "comprising" or "including" used in the present specification specify the presence of stated shapes, numbers, steps, operations, members, elements, and/or groups thereof, but do not preclude the presence or addition of one or more other shapes, numbers, steps, operations, members, elements, and/or groups thereof.

In addition, for clarity of understanding of the invention, the accompanying drawings may not be drawn to scale, and the dimensions of some components may be exaggerated. In addition, the same components in different embodiments may be given the same reference numeral.

Although "first," "second," and the like may be used to describe various components, these components may not be limited by these terms. These terms are used to distinguish one component from other components, and unless specifically stated to the contrary, a first component may be termed a second component.

Throughout the present specification, unless specifically stated to the contrary, each component may be singular or plural.

When an arbitrary configuration is disposed "on (or under)" a component or "above (or below)" a component, it can mean not only that the arbitrary configuration is disposed in contact with the upper surface (or lower surface) of the component, but also that other configurations can be interposed between the component and the arbitrary configuration disposed on (or under) or above (or below) the component.

In addition, when a component is described as being "connected," "coupled," or "linked" to another component, it is to be understood that the components may be directly connected, coupled or linked to one another, but that other components may be "interposed" between the components, or that each component may be "connected," "coupled," or "linked" through another component. In addition, when a part is to be electrically connected to another part, this includes not only direct connections, but also connections with one or more other elements disposed between the parts.

Throughout the present specification, when "A and/or B" is described, it means A, B, or A and B, unless specifically stated to the contrary. In other words, "and/or" includes all or any combination of the listed items. When "C to D" is described, it means C or more and D or less, unless specifically stated to the contrary.

The terms used in the present specification are intended to describe the embodiments of the present invention.

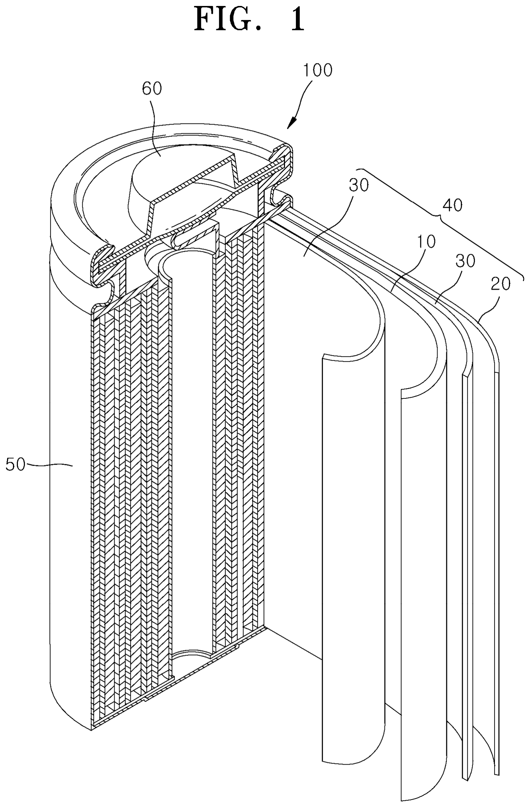

FIGS. 1 to 4 are views schematically showing a secondary battery according to some embodiments of the present invention.

## Secondary battery 100

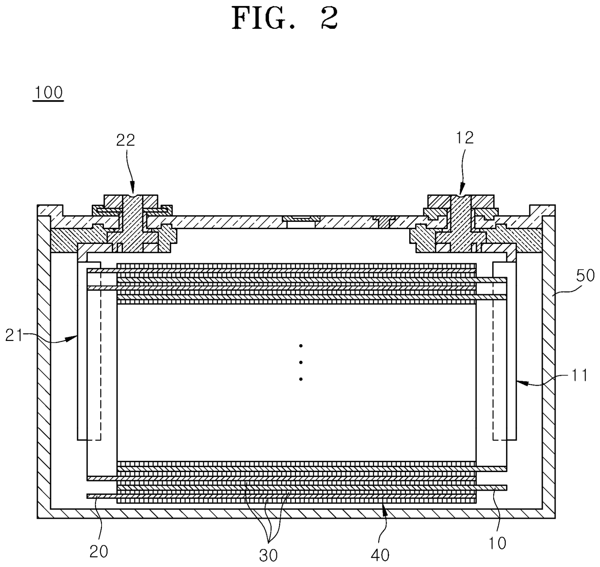

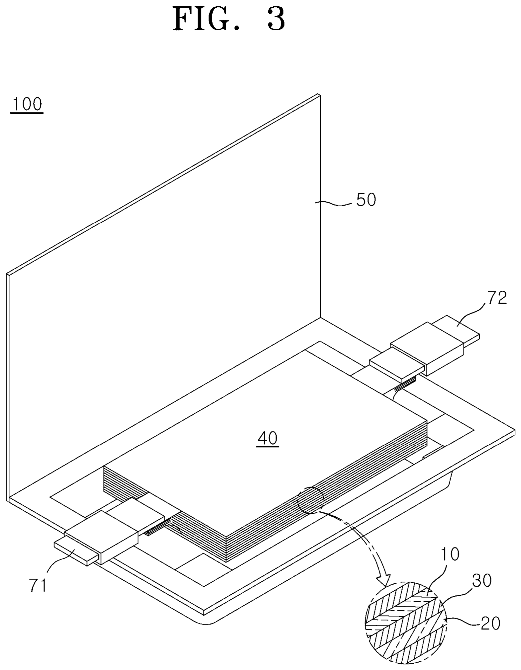

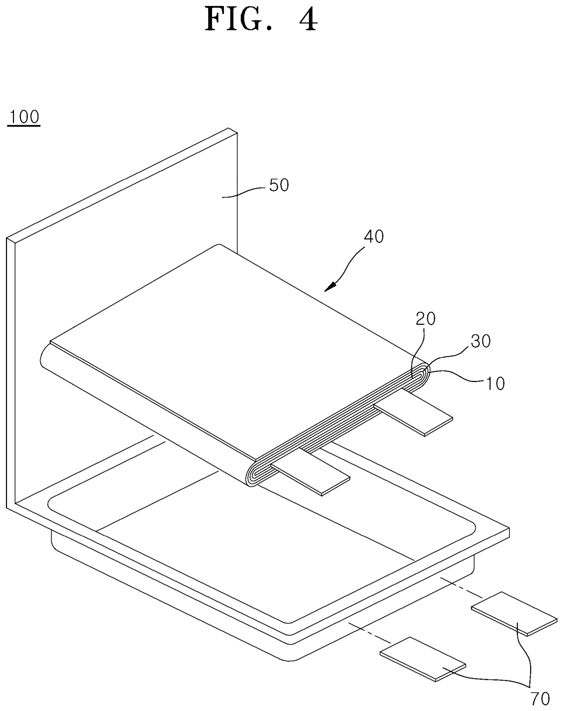

A secondary battery 100 may be classified into a cylindrical type, a prismatic type, a pouch type, a coin type, and the like according to a shape thereof. FIGS. 1 to 4 are schematic diagrams showing a secondary battery according to some embodiments of the present invention, where FIG. 1 shows a cylindrical battery, FIG. 2 shows a prismatic battery, and FIGS. 3 and 4 show pouch-type batteries. Referring to FIGS. 1 to 4, the lithium secondary battery 100 may include an electrode assembly 40 in which a separator 30 is interposed between a positive electrode 10 and a negative electrode 20, and a case 50 in which the electrode assembly 40 is accommodated. The positive electrode 10, the negative electrode 20, and the separator 30 may be impregnated with an electrolyte (not shown). As shown in FIG. 1, the secondary battery 100 may include a sealing member 60 which seals the case 50. In addition, in FIG. 2, the secondary battery 100 may include a positive electrode lead tab 11, a positive electrode terminal 12, a negative electrode lead tab 21, and a negative electrode terminal 22. As shown in FIGS. 3 and 4, the secondary battery 100 may include electrode tabs 70, that is, a positive electrode tab 71 and a negative electrode tab 72, which function as an electrical path for guiding the current generated in the electrode assembly 40 to the outside.

**Positive electrode active material**

As a positive electrode active material, a compound capable of reversibly intercalating and deintercalating lithium (e.g. lithiated intercalation compound) may be used. In an embodiment, at least one of composite oxides of lithium and a metal selected from cobalt, manganese, nickel, and a combination thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel manganese-based oxide, or a combination thereof.

In an example, a compound represented by any of the following chemical formulas may be used: $Li_aA_{1-b}X_bO_{2-c}O_c$ ($0.90 \leq a \leq 1.8$, $0 \leq b \leq 0.5$, $0 \leq c \leq 0.05$); $Li_aMn_{2-b}X_bO_{4-c}D_c$ ($0.90 \leq a \leq 1.8$, $0 \leq b \leq 0.5$, $0 \leq c \leq 0.05$); $Li_aNi_{1-b-c}Co_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_{1-b-c}Mn_bX_cO_{2-\alpha}D_\alpha$ ($0.90 \leq a \leq 1.8$, $0 \leq b \leq 0.5$, $0 \leq c \leq 0.5$, $0 < \alpha < 2$); $Li_aNi_bCo_cL^1_d$-$G_eO_2$ ($0.90 \leq a \leq 1.8$, $0 \leq b \leq 0.9$, $0 \leq c \leq 0.5$, $0 \leq d \leq 0.5$, $0 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMn_{1-b}G_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $Li_aMn_{1-g}G_gPO_4$ ($0.90 \leq a \leq 1.8$, $0 \leq g \leq 0.5$); $Li_{(3-f)}Fe_2(PO_4)_3$ ($0 \leq f \leq 2$); and $Li_aFePO_4$ ($0.90 \leq a \leq 1.8$).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and $L^1$ is Mn, Al, or a combination thereof.

In an embodiment, the positive electrode active material may be a nickel-rich positive electrode active material having a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. In an embodiment, the nickel-rich positive electrode active material is capable of implementing high capacity, and can be applied to high-capacity, high-density secondary batteries.

**Positive electrode 10**

The positive electrode 10 for the secondary battery 100 may include a current collector and a positive electrode composite material layer formed on the current collector. The positive electrode composite material layer may include a positive electrode active material and may further include a binder and/or a conductive material.

In an example, the positive electrode may further include an additive that can function as a sacrificial positive electrode.

In an embodiment, the content of the positive electrode active material may be 90 wt% to 99.5 wt% based on 100 wt% of the positive electrode composite material layer, and the content of each of the binder and the conductive material may be 0.5 wt% to 5 wt% based on 100 wt% of the positive electrode composite material layer.

The binder may attach positive electrode active material particles to each other well and also attach the positive electrode active material to the current collector well. Representative examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like, but are not limited thereto.

The conductive material imparts conductivity to the electrode, and any suitable material which does not cause a chemical change in the battery and is electrically conductive may be used. Examples of the conductive material may include a carbon-based material, such as natural graphite, artificial graphite, carbon black, acetylene black, Ketjen black, carbon fibers, carbon nanofibers, and carbon nanotubes; a metal-based material in the form of metal powder or metal fibers containing copper, nickel, aluminum, silver, or the like; a conductive polymer, such as a polyphenylene derivative; or a mixture thereof.

In an embodiment, Al may be used as the current collector, but the present invention is not limited thereto.

**Negative electrode active material**

A negative electrode active material includes a material capable of reversibly intercalating/deintercalating lithium ions, lithium metal, an alloy of lithium and a metal, a material capable of doping and dedoping lithium, or a transition metal oxide.

The material capable of reversibly intercalating/deintercalating lithium ions may be a carbon-based negative electrode active material, for example, crystalline carbon, amorphous carbon, or a combination thereof. Examples of the crystalline carbon may include graphite, such as amorphous, platy, flaky, spherical, or fibrous natural graphite or artificial graphite, and examples of the amorphous carbon may include soft carbon or hard carbon, mesophase pitch carbide, calcined coke, or the like.

In an embodiment, as the alloy of lithium and a metal, an alloy of lithium and a metal selected from Na, K, Rb, Cs, Fr, Be, Mg, Ca, Sr, Si, Sb, Pb, In, Zn, Ba, Ra, Ge, Al, and Sn may be used.

As the material capable of doping and dedoping lithium, an Si-based negative electrode active material or Sn-based negative electrode active material may be used. The Si-based negative electrode active material may be silicon, a silicon-carbon composite, $SiO_x$ (0<x≤2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. In an embodiment, the Sn-based negative electrode active material may be Sn, $SnO_2$, an Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled and an amorphous carbon coating layer (a shell) located on the surface of the secondary particle. The amorphous carbon may also be located between the silicon primary particles, and for example, the silicon primary particles may be coated with the amorphous carbon. The secondary particle may be dispersed in an amorphous carbon matrix.

The silicon-carbon composite may further include crystalline carbon. For example, the silicon-carbon composite may include a core including crystalline carbon and silicon particles and an amorphous carbon coating layer located on a surface of the core.

The Si-based negative electrode active material or the Sn-based negative electrode active material may be used in combination with the carbon-based negative electrode active material.

## Negative electrode 20

The negative electrode 20 for the secondary battery 100 includes a current collector and a negative electrode composite material layer located on the current collector. The negative electrode composite material layer may include a negative electrode active material and may further include a binder and/or a conductive material.

In an embodiment, for example, the negative electrode composite material layer may include 90 wt% to 99.5 wt% of the negative electrode active material, 0.5 wt% to 5 wt% of the binder, and 0 wt% to 5 wt% of the conductive material.

The binder may attach negative electrode active material particles to each other well and also attach the negative electrode active material to the current collector well. As the binder, a non-aqueous binder, an aqueous binder, a dry binder, or a combination thereof may be used.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

If the aqueous binder is used as the negative electrode binder, a cellulose-based compound capable of imparting viscosity may be further included. As the cellulose-based compound, a mixture of one or more of carboxymethyl cellulose, hydroxypropyl methyl cellulose, methyl cellulose, and alkali metal salts thereof may be used. In an embodiment, as the alkali metal, Na, K, or Li may be used.

The dry binder may be a polymeric material that can be fiberized, for example, polytetrafluoroethylene, polyvinylidene fluoride, a polyvinylidene fluoride-hexafluoropropylene copolymer, polyethylene oxide, or a combination thereof.

The conductive material imparts conductivity to the electrode, and any suitable material which does not cause a chemical change in the battery and is electrically conductive may be used. Examples may include a carbon-based material, such as natural graphite, artificial graphite, carbon black, acetylene black, Ketjen black, carbon fibers, carbon nanofibers, and carbon nanotubes; a metal-based material in the form of metal powder or metal fibers containing copper, nickel, aluminum, silver, or the like; a conductive polymer, such as a polyphenylene derivative; or a mixture thereof.

The negative electrode current collector may be selected from copper foil, nickel foil, stainless steel foil, titanium foil, nickel foam, copper foam, a polymer substrate coated with a conductive metal, and a combination thereof.

## Electrolyte (not shown)

In an embodiment, the electrolyte for the secondary battery 100 includes a non-aqueous organic solvent and a lithium salt.

The non-aqueous organic solvent is a medium through which ions involved in the electrochemical reaction of the battery can move.

The non-aqueous organic solvent may be a carbonate-based solvent, an ester-based solvent, an ether-based solvent, a ketone-based solvent, an alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, or the like may be used. As the ketone-based solvent, cyclohexanone or the like may be used. As the alcohol-based solvent, ethyl alcohol, isopropyl alcohol, or the like may be used, and as the aprotic solvent, a nitrile such as R-CN (R is a straight, branched, or cyclic hydrocarbon group having 2 to 20 carbon atoms and may include a double bond, an aromatic ring, or an ether bond), an amide such as dimethylformamide, a dioxolane such as 1,3-dioxolane or 1,4-dioxolane, a sulfolane, or the like may be used.

The non-aqueous organic solvent may be used alone or in a mixture of two or more.

In an embodiment, if the carbonate-based solvent is used, a mixture of a cyclic carbonate and a chain carbonate may be used, and the cyclic carbonate and the chain carbonate may be mixed in a volume ratio of 1:1 to 1:9.

The lithium salt is a material that is dissolved in an organic solvent and serves as a source of lithium ions in the battery, enabling the basic operation of the secondary battery and promoting the movement of lithium ions between the positive electrode and the negative electrode. Representative examples of the lithium salt may include one or more selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide (LiFSI)), $LiC_4F_9SO_3$, $LiN(C_xF_{2x+1}SO_2)(C_yF_{2y+1}SO_2)$ (x and y are integers from 1 to 20), lithium trifluoromethanesulfonate, lithium tetrafluoroethanesulfonate, lithium difluorobis(oxalato)phosphate (LiDFBOP), and lithium bis(oxalato)borate (LiBOB).

**Separator 30**

The separator 30 may be arranged between the positive electrode 10 and the negative electrode 20 depending on a type of secondary battery 100. As the separator 30, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/-polypropylene three-layer separator, or the like may be used.

The separator 30 may include a porous substrate and a coating layer containing an organic material, an inorganic material, or a combination thereof and located on one surface or both, or opposite, surfaces of the porous substrate.

The porous substrate may be a polymer film formed of any polymer selected from polyolefins, such as polyethylene and polypropylene, polyesters, such as polyethylene terephthalate and polybutylene terephthalate, polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, glass fiber, and polytetrafluoroethylene (e.g., Teflon), or a copolymer or mixture of two or more thereof.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be present as a mixture in a single coating layer or may be present in the form in which a coating layer including an organic material and a coating layer including an inorganic material are stacked.

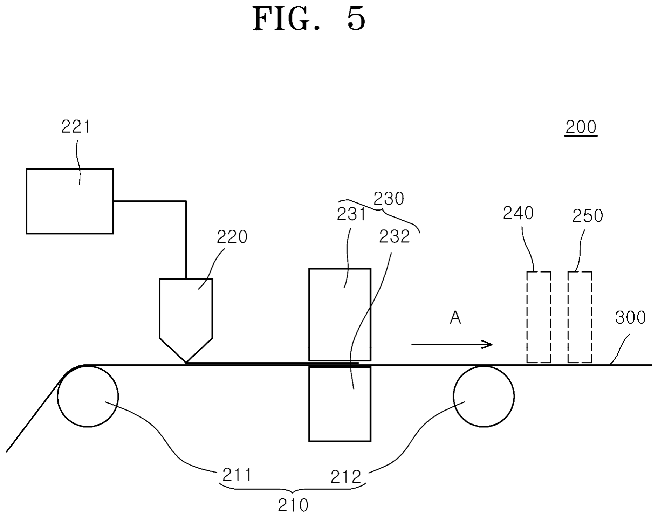

FIG. 5 is a view schematically showing an electrode manufacturing apparatus according to an embodiment of the present invention.

An electrode manufacturing apparatus 200 according to an embodiment of the present invention includes a roller 230 configured to roll an electrode plate 300, and the roller 230 is configured to primarily roll the electrode plate 300 at a first compression ratio to form a primary electrode plate, secondarily roll the primary electrode plate at a second compression ratio to form a secondary electrode plate, and tertiarily roll the secondary electrode plate at a third compression ratio to form a tertiary electrode plate.

For example, the electrode manufacturing apparatus 200 is able to manufacture the electrodes (e.g., including the positive electrode 10 and the negative electrode 20) described in FIGS. 1 to 4.

In this case, the electrode includes an electrode plate. For example, the positive electrode 10 includes a positive electrode plate. For example, the negative electrode 20 includes a negative electrode plate.

The electrode plate (e.g., including the positive electrode plate and the negative electrode plate) includes a substrate and a composite material layer.

The substrate includes, for example, the current collector described with respect to FIGS. 1 to 4.

The composite material layer includes, for example, the composite material layer described in FIGS. 1 to 4. The composite material layer is provided, for example, on at least one surface of the substrate. For example, if the composite material layer is made in the form of a free-standing film, the composite material layer is attached to at least one surface of the substrate. For example, if the composite material layer is made in the form of a slurry, the composite material layer is applied on at least one surface of the substrate.

The composite material layer is provided on at least a portion of the substrate. In an embodiment, the composite material layer may be continuously provided on the substrate. In an embodiment, the composite material layer may be intermittently applied on the substrate at intervals (e.g., predetermined intervals).

The electrode plate includes a coated portion in which the composite material layer is applied on the substrate and an uncoated portion in which the composite material layer is not applied on the substrate and the substrate is exposed to the outside.

For example, if the electrode plate is a positive electrode plate, the positive electrode plate includes a positive electrode substrate and a positive electrode composite material layer. In an embodiment, the positive electrode substrate includes, for example, aluminum (Al). The positive electrode composite material layer includes, for example, a compound capable of reversibly intercalating and deintercalating lithium (e.g. lithiated intercalation compound).

For example, if the electrode plate is a negative electrode plate, the negative electrode plate includes a negative electrode substrate and a negative electrode composite material layer. In an embodiment, the negative electrode substrate includes, for example, copper (Cu). The negative electrode composite material layer includes, for example, a material capable of reversibly intercalating and deintercalating lithium ions, lithium metal, an alloy of lithium and a metal, a material capable of doping and dedoping lithium, or a transition metal oxide.

In an embodiment, the negative electrode plate may be formed to be larger than the positive electrode plate.

Herein, a case in which an electrode manufactured by the electrode manufacturing apparatus 200 according to an embodiment of the present invention is the negative electrode 20 and the electrode plate 300 is a negative electrode plate will be described as an example.

The electrode manufacturing apparatus 200 rolls the electrode plate 300 to improve adhesion between the substrate and the composite material layer and improve the density of the electrode plate. Accordingly, the electrode manufacturing apparatus 200 may allow the electrode 10 or 20 including the electrode plate 300 to have high quality and high density.

The electrode manufacturing apparatus 200 includes the roller 230. The electrode manufacturing apparatus 200 may further include an electrode plate transfer unit, or electrode plate transferer, 210. However, the components included in the electrode manufacturing apparatus 200 are not limited to the components shown in FIG. 5, and the electrode manufacturing apparatus 200 may include only some of the components shown in FIG. 5 or further include additional components in addition to the components shown in FIG. 5.

The electrode plate transfer unit 210 is configured to transfer the electrode plate 300. For example, the electrode plate transfer unit 210 may transfer the electrode plate 300 under constant tension. The electrode plate transfer unit 210 guides the direction of movement of the electrode plate 300. The electrode plate transfer unit 210 is formed, for example, in the form of a roll.

In an embodiment, the electrode plate transfer unit 210 includes a first electrode plate transfer unit 211 and a second electrode plate transfer unit 212.

The first electrode plate transfer unit 211 is disposed in front of the roller 230 and transfers the electrode plate 300 toward the roller 230. For example, the first electrode plate transfer unit 211 may guide the electrode plate 300 toward the roller 230 while the electrode plate 300 wound on a first roll (not shown) is unwound. In an embodiment, for example, the first electrode plate transfer unit 211 may function as the first roll.

The second electrode plate transfer unit 212 is disposed behind the roller 230 and transfers the electrode plate 300 rolled by the roller 230. For example, the secondary electrode plate transfer unit 212 may guide the electrode plate 300 from the roller 230 such that the electrode plate 300 is wound on a second roll (not shown). In an embodiment, for example, the second electrode plate transfer unit 212 may function as the second roll. In an embodiment, for example, the secondary electrode plate transfer unit 212 may transfer the rolled electrode plate 300 toward another component.

Accordingly, the electrode plate 300 may be directed along a direction "A" from the first electrode plate transfer unit 211 to the second electrode plate transfer unit 212 by passing through the roller 230.

In an embodiment, the electrode manufacturing apparatus 200 may further include a coating unit, or coater, 220.

The coating unit 220 is configured to apply a composite material layer on a substrate (e.g., at least one surface of a substrate). For example, the coating unit 220 may apply a composite material layer on a substrate transferred toward the coating unit 220 by the first electrode plate transfer unit 211. The electrode plate transfer unit 210 transfers the electrode plate formed by applying the composite material layer on the substrate toward the roller 230.

In an embodiment, for example, if the composite material layer is formed in the form of a slurry, the coating unit 220 applies the composite material layer by applying the slurry onto the substrate. For example, the coating unit 220 applies the slurry stored in a reservoir 221 on the substrate. In this case, the slurry may be formed by mixing an active material, a conductive material, and/or a binder. In this case, the coating unit 220 may be formed in the form of a coater (e.g. die coater).

In an embodiment, for example, if the composite material layer is formed in the form of a free-standing film, the coating unit 220 applies the composite material layer by attaching the free-standing film to the substrate. In this case, the coating unit 220 may be formed in the form of a roll on which a free-standing film is wound. The coating unit 220 may allow a free-standing film to be unwound and attached to the substrate.

For example, the coating unit 220 may be located in front of the roller 230.

The roller 230 rolls the electrode plate 300 that is transferred by the electrode plate transfer unit 210. For example, the roller 230 may roll the electrode plate 300 in which the composite material layer is applied on the substrate by the coating unit 220. In an embodiment, for example, the roller 230 rolls the electrode plate 300 that is introduced into the roller 230 by the electrode plate transfer unit 210.

In an embodiment, the roller 230 includes an upper roller 231 and a lower roller 232 which are located adjacent to each other. For example, the roller 230 rolls the electrode plate 300 that is introduced between the upper roller 231 and the lower roller 232.

The upper roller 231 and the lower roller 232 rotate in opposite directions. For example, if the upper roller 231 rotates clockwise, the lower roller 232 rotates counterclockwise. For example, if the upper roller 231 rotates counterclockwise, the lower roller 232 rotates clockwise.

The upper roller 231 and the lower roller 232 are spaced apart from each other. For example, the upper roller 231 and the lower roller 232 may be spaced apart at an interval less than or equal to the thickness of the electrode plate 300. In this case, the interval between the upper roller 231 and the lower roller 232 may be adjusted according to the rolling pressure that the roller 230 applies to the electrode plate 300. In an embodiment, for example, if the roller 230 applies a relatively high pressure to the electrode plate 300, the interval between the upper roller 231 and the lower roller 232 may be relatively narrow. In an embodiment, for example, if the roller 230 applies a relatively low pressure to the electrode plate 300, the interval between the upper roller 231 and the lower roller 232 may be relatively wide.

In an embodiment, the roller 230 may roll the electrode plate 300 through pressing by movement rather than rotation. In this case, the upper roller 231 and the lower roller 232 may apply a force to the electrode plate 300 through movement without rotation. For example, the upper roller 231 may roll the electrode plate 300 located on the lower roller 232 while moving toward the lower roller 232. In an embodiment, for example, the lower roller 232 may roll the electrode plate 300 located on the lower roller 232 while moving toward the upper roller 231. In an embodiment, for example, the upper roller 231 and the lower roller 232 may roll the electrode plate 300 that is introduced into the roller 230 while moving toward each other.

In this case, the upper roller 231 and the lower roller 232 may be located in a direction perpendicular to the ground. However, an arrangement of the roller 230 according to an embodiment of the present invention is not limited thereto, and, for example, the upper roller 231 and the lower roller 232 may be located in a horizontal direction to the ground. Herein, a case in which the upper roller 231 and lower roller 232 are located in a direction perpendicular to the ground will be described as an example.

As described above, the electrode plate transfer unit 210 transfers the electrode plate 300 to a space between the upper roller 231 and the lower roller 232.

The roller 230 applies a force to the electrode plate 300 to roll the electrode plate 300. In this case, the roller 230 allows the electrode plate 300 to be rolled at a compression ratio (e.g., predetermined compression ratio) (reduction ratio) by rolling.

Here, the compression ratio represents the degree to which the electrode plate 300 is rolled. For example, the compression ratio may be defined by the following Equation 1.

Equation 1

$$Compression\ Ratio\ (\%) = \frac{Second\ Thickness}{First\ Thickness} \times 100$$

In the above equation, the first thickness represents the thickness before the electrode plate 300 is rolled after the composite material layer is provided on the substrate.

In the above equation, the second thickness represents the thickness after the electrode plate 300 is rolled by the roller 230.

The roller 230 rolls the electrode plate 300 multiple times (i.e. at least three times). For example, the electrode plate transfer unit 210 may transfer the electrode plate 300 that has been rolled by the roller 230 from the back to the front of the roller 230. Accordingly, the roller 230 re-rolls the previously rolled electrode plate 300.

The roller 230 rolls the electrode plate 300 three or more times. For example, the roller 230 may roll a negative electrode plate three times. For example, the roller 230 may perform multi-stage rolling with different pressures in three stages to achieve the high density of the electrode plate 300 and improve quality.

In an embodiment, the electrode plate 300 is rolled multiple times, and the second thickness in Equation 1 represents the thickness of the electrode plate 300 that has been rolled multiple times. For example, after the second rolling, the second thickness in Equitation 1 is replaced by a third thickness which represents the thickness of the electrode plate 300 after the second rolling. Here, the first thickness in Equation 1 is the thickness of the electrode plate 300 before rolling as described above.

Herein, an electrode manufacturing method according to an embodiment of the present invention will be described in further detail.

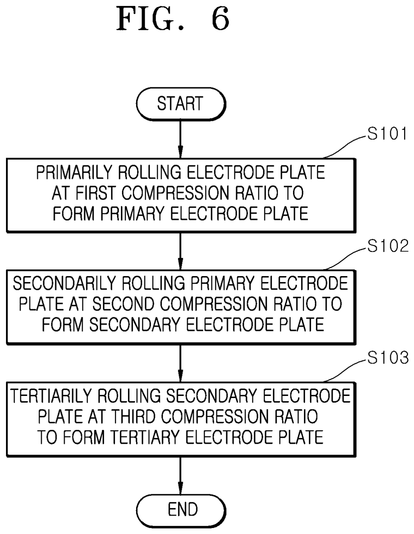

FIG. 6 is a flowchart of an electrode manufacturing method according to an embodiment of the present invention.

Referring to FIG. 5, the electrode manufacturing apparatus 200 according to an embodiment of the present invention has been described. As described in FIG. 5, the electrode manufacturing apparatus 200 may roll the electrode plate 300. In FIG. 6, how the electrode manufacturing apparatus 200 manufactures an electrode is described in further detail.

As shown in FIGS. 5 and 6, the electrode manufacturing method according to the present invention includes primarily rolling an electrode plate 300 at a first compression ratio to form a primary electrode plate (S101).

The roller 230 rolls the electrode plate 300 that is introduced to the roller 230. In this case, the electrode plate 300 introduced to the roller 230 may be an electrode plate in which a composite material layer is applied on a substrate by the coating unit 220.

The roller 230 primarily rolls the electrode plate 300 at a first compression ratio to form a primary electrode plate.

In an embodiment, for example, the first compression ratio is 80% or more. If the first compression ratio is less than 80%, it is difficult for the electrode plate 300 to achieve sufficient density. For example, if the first compression ratio is less than 80%, a considerable amount of additional rolling is required for the electrode plate 300 to have sufficient density, thereby leading to process loss. For example, if the first compression ratio is less than 80%, a higher compression ratio needs to be implemented during additional rolling in order for the electrode plate 300 to have sufficient density, thereby leading to damage to the electrode plate 300. Therefore, in an embodiment, the first compression ratio is 80% or more.

In an embodiment, for example, the first compression ratio is less than 85%. In an embodiment, for example, the first compression ratio is less than 84%. In an embodiment, for example, the first compression ratio is less than 83%. If the first compression ratio is 85% or more, the electrode plate 300 may be damaged during the primary rolling. Therefore, in an embodiment, the first compression ratio is less than 85%.

As shown in FIGS. 5 and 6, the electrode manufacturing method according to the present invention includes secondarily rolling the primary electrode plate at a second compression ratio to form a secondary electrode plate (S102).

The roller 230 rolls the electrode plate 300 that is introduced to the roller 230. In this case, the electrode plate 300 introduced to the roller 230 may be the primary electrode plate that has been primarily rolled at a first compression ratio by the roller 230. The second electrode plate transfer unit 212 may transfer the primary electrode plate toward the first electrode plate transfer unit 211.

The roller 230 may re-roll the previously rolled electrode plate 300. For example, the roller 230 secondarily rolls the primary electrode plate at a second compression ratio to form a secondary electrode plate.

In an embodiment, for example, the second compression ratio is greater than the first compression ratio. In an embodiment, for example, the second compression ratio is 85% or more and 93% or less. In an embodiment, for example, the second compression ratio is 85% or more and 92% or less. In an embodiment, for example, the second compression ratio is 85% or more and 91% or less. In an embodiment, for example, the second compression ratio is 85% or more and 90% or less. In an embodiment, for example, the second compression ratio is 87% or more and 93% or less. In an embodiment, for example, the second compression ratio is 89% or more and 93% or less. In an embodiment, for example, the second compression ratio is 87% or more and 91% or less. In an embodiment, for example, the second compression ratio is 89% or more and 91% or less. In an embodiment, for example, the second compression ratio is 90%.

In an embodiment, for example, a difference between the second compression ratio and the first compression ratio is 12% or less. In an embodiment, for example, the difference between the second compression ratio and the first compression ratio is 11% or less. In an embodiment, for example, the difference between the second compression ratio and the first compression ratio is 10% or less. In an embodiment, for example, the difference between the second compression ratio and the first compression ratio is 9% or less. In an embodiment, for example, the difference between the second compression ratio and the first compression ratio is 8% or less. If the difference between the second compression ratio and the first compression ratio is greater than 12%, the electrode plate 300 may be damaged by the secondary rolling.

In an embodiment, for example, the difference between the second compression ratio and the first compression ratio is 5% or more. If the difference between the second compression ratio and the first compression ratio is less than 5%, there is no practical benefit of performing rolling multiple times. Therefore, in an embodiment, the difference between the second compression ratio and the first compression ratio is 5% or more to minimize or reduce process loss and achieve the effect of performing rolling multiple times.

As shown in FIGS. 5 and 6, the electrode manufacturing method according to the present invention includes tertiarily rolling the secondary electrode plate at a third compression ratio to form a tertiary electrode plate (S103).

The roller 230 rolls the electrode plate 300 that is introduced to the roller 230. In this case, the electrode plate 300 introduced to the roller 230 may be the secondary electrode plate that has been secondarily rolled at a second compression ratio by the roller 230. The second electrode plate transfer unit 212 may transfer the secondary electrode plate toward the first electrode plate transfer unit 211.

The roller 230 may re-roll the previously rolled electrode plate 300. For example, the roller 230 tertiarily rolls the secondary electrode plate at a third compression ratio to form a tertiary electrode plate.

In an embodiment, for example, the difference between the second compression ratio and the first compression ratio is less than or equal to a difference between the third compression ratio and the second compression ratio. In this way, the electrode manufacturing apparatus 200 and/or electrode manufacturing method can ensure that the electrode plate 300 has a high density without damaging the electrode plate 300.

In an embodiment, for example, the difference between the second compression ratio and the first compression ratio may be the same as the difference between the third compression ratio and the second compression ratio. In an embodiment, for example, the first compression ratio may be 80%, the second compression ratio may be 90%, and the third compression ratio may be 100%.

In an embodiment, for example, the third compression ratio is greater than the second compression ratio. In an embodiment, for example, the third compression ratio is 100% or less. In an embodiment, the roller 230 forms a tertiary electrode plate having a compression ratio of 100% through the tertiary rolling. In this way, the electrode manufacturing apparatus 200 can manufacture the electrode plate 300 so as to be applicable to the electrode 10 or 20.

In an embodiment, for example, the difference between the third compression ratio and the second compression ratio is 15% or less. In an embodiment, for example, the difference between the third compression ratio and the second compression ratio is 13% or less. In an embodiment, for example, the difference between the third compression ratio and the second compression ratio is 12% or less. In an embodiment, for example, the difference between the third compression ratio and the second compression ratio is 11% or less. In an embodiment, for example, the difference between the third compression ratio and the second compression ratio is 10% or less. If the difference between the third compression ratio and the second compression ratio is greater than 15%, the electrode plate 300 may be damaged by the tertiary rolling.

In an embodiment, for example, the difference between the third compression ratio and the second compression ratio is 5% or more. If the difference between the third compression ratio and the second compression ratio is less than 5%, there is no practical benefit of performing rolling multiple times. Therefore, in an embodiment, the difference between the third compression ratio and the second compression ratio is 5% or more to minimize or reduce process loss and achieve the effect of performing rolling multiple times.

In FIGS. 5 and 6, an example in which the electrode manufacturing apparatus 200 includes one roller 230 and primary rolling, secondary rolling, and tertiary rolling are performed by the roller 230 has been described. However, the electrode manufacturing apparatus 200 and electrode manufacturing method according to an embodiment of the present invention are not limited thereto.

For example, the electrode manufacturing apparatus 200 according to an embodiment of the present invention may include a plurality (n) of rollers. Here, n is a natural number greater than or equal to 2. Also, n is a natural number less than or equal to the number of times of rolling. For example, if the number of times of rolling is 3, the electrode manufacturing apparatus 200 may include two or three rollers.

For example, the electrode manufacturing apparatus 200 may include three rollers. For example, the electrode manufacturing apparatus 200 may include a first roller, a second roller, and a third roller.

In an embodiment, for example, the first roller primarily rolls the electrode plate 300 at a first compression ratio to form a primary electrode plate. For example, the second roller is disposed behind the first roller. For example, the second roller secondarily rolls the primary electrode plate at a second compression ratio to form a secondary electrode plate. For example, the third roller is disposed behind the second roller. For example, the third roller tertiarily rolls the secondary electrode plate at a third compression ratio to form a tertiary electrode plate.

In an embodiment, the electrode manufacturing apparatus 200 includes a plurality of rollers 230 for rolling the electrode plate 300, and an appropriate pressing force may be provided to each order of rolled electrode plate 300. In addition, the electrode manufacturing apparatus 200 may reduce a time loss that occurs upon multi-stage rolling and reduce an overall process time.

In an embodiment, the first roller, the second roller, and the third roller may all be located at the same height from the ground. Accordingly, the electrode manufacturing apparatus 200 may minimize or reduce tension changes and/or damage that may occur during the transfer of the electrode plates 300.

In an embodiment, at least one of the first roller, the second roller, and the third roller may be located at a different height from the ground compared with the remaining rollers. Accordingly, the electrode manufacturing apparatus 200 may improve space efficiency.

In this case, the electrode plate 300 may be, for example, a negative electrode plate.

As such, the electrode manufacturing apparatus 200 may be composed of various components that allow the electrode plate 300 to be rolled multiple times.

As shown in FIG. 5, the electrode manufacturing apparatus 200 may further include a slitter 240 and a trimming unit, or trimmer 250.

The slitter 240 may cut the rolled electrode plate 300 (e.g., the tertiary electrode plate) at intervals (e.g., predetermined intervals) to form a unit electrode plate.

For example, the slitter 240 may cut the electrode plate 300 into a unit electrode plate size. In this case, the unit electrode plate is a smallest unit electrode plate formed to be applied to one electrode 10 or 20. For example, the slitter 240 may cut the electrode plate 300 along an uncoated portion to form a unit electrode plate. However, the slitter 240 may also cut the electrode plate 300 along the coated portion or uncoated portion to form a unit electrode plate.

Even if rolling is performed multiple times, electrode plate detachment in which composite material is detached from the substrate may occur in the electrode plate 300. The slitter 240 may cut out an area in which electrode plate detachment occurs while forming a unit electrode plate. In an embodiment, the substrate and the composite material layer may be formed larger or wider in consideration of the area to be cut out by the slitter 240.

The trimming unit 250 may trim at least one side of the unit electrode plate. In an embodiment, for example, the trimming unit 250 may trim a width of 3% or less relative to a total width of the unit electrode plate.

Even if rolling is performed multiple times, substrate compression may occur in the electrode plate 300. For example, the trimming unit 250 may cut out the area in which substrate compression occurs.

In this case, if the area cut out by the trimming unit 250 is large, there may be problems such as loss of raw materials and an increase in raw material cost. On the other hand, in the electrode plates 300 rolled by the electrode manufacturing apparatus 200 and/or electrode manufacturing method according to an embodiment of the present invention, substrate compression may not occur or occur in a very small area. Therefore, according to an embodiment of the present invention, substrate compression can be minimized, reduced, or eliminated by the trimming unit to provide a high-quality electrode plate.

Through the above configuration and/or process, the electrode manufacturing apparatus 200 and/or electrode manufacturing method according to an embodiment of the present invention provide an electrode having improved quality and/or a high-density composite material layer.

Herein, properties, features, or effects of an electrode manufactured by the electrode manufacturing apparatus 200 and/or electrode manufacturing method according to an embodiment of the present invention will be described in further detail.

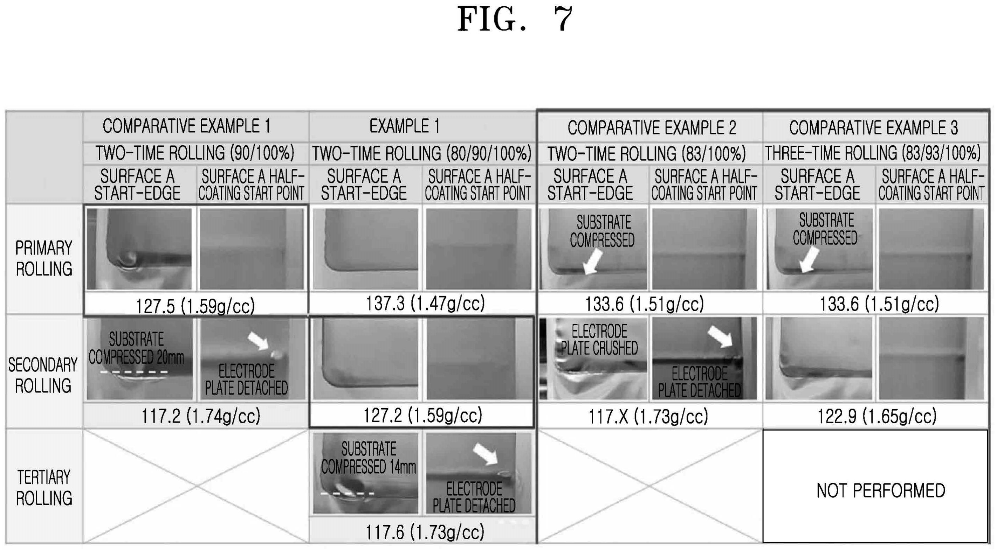

FIG. 7 is a table for comparatively describing electrodes manufactured according to comparative examples and an electrode manufactured according to an example of the present invention.

As described in FIGS. 5 and 6, the electrode manufacturing apparatus 200 and/or electrode manufacturing method according to an embodiment of the present invention can provide a high-quality and/or high-density electrode plate.

In an embodiment, for example, in the case of an electrode manufactured according to an embodiment of the present invention, the tertiary electrode plate has a composite material layer density of 1.70 g/cc or more. In an embodiment, for example, the tertiary electrode plate in the electrode has a composite material layer density of 1.71 g/cc or more. In an embodiment, for example, the tertiary electrode plate in the electrode has a composite material layer density of 1.72 g/cc or more. In an embodiment, for example, the tertiary electrode plate in the electrode has a composite material layer density of 1.73 g/cc or more. In an embodiment, for example, a negative electrode plate manufactured according to an embodiment of the present invention may be formed such that the composite material layer has a high density of 1.70 g/cc or more.

For example, in the case of an electrode manufactured according to an embodiment of the present invention, the tertiary electrode plate has a substrate compression of 15 mm or less. In an embodiment, for example, the tertiary electrode plate in the electrode has a substrate compression of 14 mm or less. In an embodiment, for example, a negative electrode plate manufactured according to an embodiment of the present invention may have a substrate compression of 15 mm or less.

In this case, the substrate compression is the compression formed on an area of the uncoated portion extending in the widthwise direction of the electrode plate 300 at the interface of the coated portion and the uncoated portion.

For example, in the case of the electrode manufactured according to an embodiment of the present invention, the tertiary electrode plate has a composite material layer density of 1.70 g/cc or more and a substrate compression of 15 mm or less. In an embodiment, for example, a negative electrode plate manufactured according to an embodiment of the present invention may have a composite material layer density of 1.70 g/cc or more and a substrate compression of 14 mm or less. In an embodiment, for example, a negative electrode plate manufactured according to an embodiment of the present invention may have a composite material layer density of 1.73 g/cc or more and a substrate compression of 15 mm or less. In an embodiment, for example, a negative electrode plate manufactured according to an embodiment of the present invention may have a composite material layer density of 1.73 g/cc or more and a substrate compression of 14 mm or less.

In an embodiment, the electrode manufacturing apparatus 200 may further include a slitter and/or a trimming unit. Accordingly, the electrode manufacturing apparatus 200 may form a unit electrode plate while eliminating or reducing substrate compression and/or electrode plate detachment. As a result, the electrode manufacturing apparatus 200 and/or the electrode manufacturing method provide a high-quality/high-density electrode.

Herein, an electrode manufactured according to an embodiment of the present invention will be described using experimental values. Comparative Examples 1 to 3 and Example 1 shown in FIG. 7 all have a same first thickness.

### 1) Comparative Example 1

In FIG. 7, Comparative Example 1 represents an electrode plate that has been rolled two times. In Comparative Example 1, an electrode plate was rolled such that a first compression ratio was 90% in primary rolling. Also, in Comparative Example 1, the electrode plate was rolled such that a second compression ratio was 100% in secondary rolling.

As shown in FIG. 7, Comparative Example 1 implemented a high-density electrode plate having a composite material layer density of 1.74 g/cc. However, in Comparative Example 1, the first compression ratio was set to 90% in the primary rolling to perform rolling twice. As a result, Comparative Example 1 exhibited a substrate compression of 20 mm or more and electrode plate detachment. In other words, it can be seen that Comparative Example 1 did not implement a high-quality electrode plate due to damage to the electrode plate.

### 2) Comparative Example 2

In FIG. 7, Comparative Example 2 represents an electrode plate that has been rolled two times. In Comparative Example 2, an electrode plate was rolled such that a first compression ratio was 83% in primary rolling. Also, in Comparative Example 2, the electrode plate was rolled such that a second compression ratio was 100% in secondary rolling.

As shown in FIG. 7, Comparative Example 2 implemented a high-density electrode plate having a composite material layer density of 1.73 g/cc. However, in Comparative Example 2, the first compression ratio and the second compression ratio differed by greater than 12% to perform rolling twice. As a result, in Comparative Example 2, the electrode plate was greatly damaged at the edge, and electrode plate detachment occurred. In other words, it can be seen that Comparative Example 2 did not implement a high-quality electrode plate due to damage to the electrode plate.

### 3) Comparative Example 3

In FIG. 7, Comparative Example 3 represents an electrode plate in which roll pressing has been carried out up to two times from the electrode plate where roll pressing is scheduled for three times. In Comparative Example 3, an electrode plate was rolled such that a first compression ratio was 83% in primary rolling. Also, in Comparative Example 3, the electrode plate was rolled such that a second compression ratio was 100% in secondary rolling. However, the tertiary rolling with 100% compression rate was not been performed since substrate compression had occurred in the first rolling.

As shown in FIG. 7, Comparative Example 3 implemented a low-density electrode plate having a composite material layer density of less than 1.70 g/cc after secondary rolling. This is because the composite material layer was not appropriately rolled as the difference between the second compression ratio and the first compression ratio was greater than the difference between the third compression ratio and the second compression ratio. In other words, it can be seen that Comparative Example 3 failed to implement a high-density electrode plate.

### 4) Example 1

In FIG. 7, Example 1 represents an electrode plate that has been rolled three times. In Example 1, an electrode plate was rolled such that a first compression ratio was 80% in primary rolling. Also, in Example 1, the electrode plate was rolled such that a second compression ratio was 90% in secondary rolling. Also, in Example 1, the electrode plate was rolled such that a third compression ratio was 100% in tertiary rolling.

As shown in FIG. 7, Example 1 implemented a high-density electrode plate having a composite material layer density of 1.73 g/cc. In addition, Example 1 implemented a secondary electrode plate in which substrate compression and electrode plate detachment did not occur. Also, Example 1 implemented an electrode plate exhibiting a substrate compression of 14 mm and electrode plate detachment by tertiarily rolling the secondary electrode plate.

As such, Example 1 could implement an electrode plate in which substrate compression at the edge and electrode plate detachment were relatively reduced.

According to one or more embodiments of the present invention, an electrode having improved quality is provided.

For example, one or more embodiments of the present invention provide an electrode exhibiting reduced substrate compression.

For example, one or more embodiments of the present invention provide an electrode exhibiting reduced electrode plate detachment.

According to one or more embodiments of the present invention, an electrode in which a high-density composite material layer is implemented is provided.

**Claims**

1. An apparatus for manufacturing an electrode (200), the apparatus (200) comprising:

    a roller (230) configured to roll an electrode plate (300),
    wherein the roller (230) is configured to primarily roll the electrode plate (300) at a first compression ratio to form a primary electrode plate, secondarily roll the primary electrode plate at a second compression ratio to form a secondary electrode plate, and tertiarily roll the secondary electrode plate at a third compression ratio to form a tertiary electrode plate.

2. The apparatus (200) as claimed in claim 1, wherein the third compression ratio is greater than the second compression ratio, and the second compression ratio is greater than the first compression ratio.

3. The apparatus as claimed in claim 1 or 2, wherein a difference between the second compression ratio and the first compression ratio is less than or equal to a difference between the third compression ratio and the second compression ratio.

4. The apparatus as claimed in any one of the preceding claims, wherein a difference between the second compression ratio and the first compression ratio is 12% or less.

5. The apparatus as claimed in any one of the preceding claims, wherein a difference between the third compression ratio and the second compression ratio is 15% or less.

6. The apparatus as claimed in any one of claims 1 to 3, wherein a difference between the second compression ratio and the first compression ratio and a difference between the third compression ratio and the second compression ratio are each 5% or more.

7. The apparatus as claimed in any one of the preceding claims, wherein the first compression ratio is 80% or more.

8. The apparatus as claimed in any one of the preceding claims, further comprising a coating unit (220) configured to apply a composite material layer on at least one surface of a substrate to form the electrode plate (300).

9. The apparatus as claimed in claim 8, wherein the tertiary electrode plate has a composite material layer density of 1.70 g/cc or more.

10. The apparatus as claimed in claim 8 or 9, wherein the tertiary electrode plate has a substrate compression of 15 mm or less.

11. The apparatus as claimed in any one of the preceding claims, further comprising:

    a slitter (240) configured to cut the tertiary electrode plate at intervals to form a unit electrode plate; and
    a trimmer configured to trim at least one side of the unit electrode plate,
    wherein the trimmer is configured to trim a width of 3% or less relative to a total width of the unit electrode plate.

12. The apparatus as claimed in any one of the preceding claims, wherein the electrode plate (300) is a negative electrode plate.

13. A method of manufacturing an electrode (10), the method comprising:

primarily rolling an electrode plate (300) at a first compression ratio to form a primary electrode plate;
secondarily rolling the primary electrode plate at a second compression ratio to form a secondary electrode plate; and
tertiarily rolling the secondary electrode plate at a third compression ratio to form a tertiary electrode plate.

# FIG. 1

# FIG. 2

# FIG. 3

# FIG. 4

# FIG. 5

# FIG. 6

START

PRIMARILY ROLLING ELECTRODE PLATE
AT FIRST COMPRESSION RATIO TO
FORM PRIMARY ELECTRODE PLATE — S101

SECONDARILY ROLLING PRIMARY ELECTRODE
PLATE AT SECOND COMPRESSION RATIO TO
FORM SECONDARY ELECTRODE PLATE — S102

TERTIARILY ROLLING SECONDARY ELECTRODE
PLATE AT THIRD COMPRESSION RATIO
TO FORM TERTIARY ELECTRODE PLATE — S103

END

# FIG. 7

| | COMPARATIVE EXAMPLE 1 | | EXAMPLE 1 | | COMPARATIVE EXAMPLE 2 | | COMPARATIVE EXAMPLE 3 | |
|---|---|---|---|---|---|---|---|---|
| | TWO-TIME ROLLING (90/100%) | | TWO-TIME ROLLING (80/90/100%) | | TWO-TIME ROLLING (83/100%) | | THREE-TIME ROLLING (83/93/100%) | |
| | SURFACE A START-EDGE | SURFACE A HALF-COATING START POINT | SURFACE A START-EDGE | SURFACE A HALF-COATING START POINT | SURFACE A START-EDGE | SURFACE A HALF-COATING START POINT | SURFACE A START-EDGE | SURFACE A HALF-COATING START POINT |
| PRIMARY ROLLING | 127.5 (1.59g/cc) | | 137.3 (1.47g/cc) | | 133.6 (1.51g/cc) | | 133.6 (1.51g/cc) | |
| SECONDARY ROLLING | 117.2 (1.74g/cc) | | 127.2 (1.59g/cc) | | 117.X (1.73g/cc) | | 122.9 (1.65g/cc) | |
| TERTIARY ROLLING | | | 117.6 (1.73g/cc) | | | | NOT PERFORMED | |

EP 4 756 887 A1

Europäisches
Patentamt
European
Patent Office
Office européen
des brevets

# EUROPEAN SEARCH REPORT

Application Number

EP 25 22 0866

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 736 215 A (SHENZHEN GRAND POWERSOURCE CO LTD) 30 April 2021 (2021-04-30) * abstract * * paragraph [0005] * * example 2 * * figure 1 * ----- | 1-13 | INV. H01M4/04 H01M10/04 |
| X | WO 2024/138006 A1 (SAKUU CORP [US]) 27 June 2024 (2024-06-27) * abstract * * figure 4A * * paragraph [0078] * ----- | 1-10,12, 13 | |
| X | US 2017/256781 A1 (SUZUKI KAZUHIRO [JP] ET AL) 7 September 2017 (2017-09-07) * abstract * * figure 1 * ----- | 1-10,12, 13 | |
| A | EP 4 027 411 A1 (SHOWA DENKO MATERIALS CO LTD [JP]) 13 July 2022 (2022-07-13) * abstract * ----- | 1-13 | TECHNICAL FIELDS SEARCHED (IPC) |
| A | CN 213 763 435 U (GUANGDONG ZHAONENG TECH CO LTD) 23 July 2021 (2021-07-23) * abstract * ----- | 1-13 | H01M |

The present search report has been drawn up for all claims

| Place of search | Date of completion of the search | Examiner |
|---|---|---|
| The Hague | 30 March 2026 | Rosciano, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

# EP 4 756 887 A1

## ANNEX TO THE EUROPEAN SEARCH REPORT
## ON EUROPEAN PATENT APPLICATION NO.

EP 25 22 0866

30-03-2026

| Patent document cited in search report | | Publication date | Patent family member(s) | | Publication date |
|---|---|---|---|---|---|
| CN 112736215 | A | 30-04-2021 | NONE | | |
| WO 2024138006 | A1 | 27-06-2024 | EP | 4639643 A1 | 29-10-2025 |
| | | | JP | 2026508296 A | 10-03-2026 |
| | | | KR | 20250142858 A | 30-09-2025 |
| | | | US | 2024222594 A1 | 04-07-2024 |
| | | | WO | 2024138006 A1 | 27-06-2024 |
| US 2017256781 | A1 | 07-09-2017 | CN | 106804115 A | 06-06-2017 |
| | | | JP | 6067636 B2 | 25-01-2017 |
| | | | JP | 2016062654 A | 25-04-2016 |
| | | | KR | 20170049583 A | 10-05-2017 |
| | | | US | 2017256781 A1 | 07-09-2017 |
| | | | WO | 2016038889 A1 | 17-03-2016 |
| EP 4027411 | A1 | 13-07-2022 | EP | 4027411 A1 | 13-07-2022 |
| | | | JP | 7447907 B2 | 12-03-2024 |
| | | | JP | WO2021044482 A1 | 11-03-2021 |
| | | | US | 2022293942 A1 | 15-09-2022 |
| | | | WO | 2021044482 A1 | 11-03-2021 |
| CN 213763435 | U | 23-07-2021 | NONE | | |

EPO FORM P0459